# EUROPÄISCHE PATENTSCHRIFT

(11) **EP 2 688 778 B1**
(45) Veröffentlichungstag und Bekanntmachung des Hinweises auf die Patenterteilung: **07.06.2017**
(21) Anmeldenummer: 12702001.4
(22) Anmeldetag: 26.01.2012
(51) Int. Cl.: B60T 7/04, B60T 7/10, B60T 13/74, B60T 17/18, B60T 17/22, B60T 7/08

(54) **VERFAHREN ZUM EINSTELLEN EINER FESTSTELLBREMSE IN EINEM FAHRZEUG**
METHOD FOR ADJUSTING A PARKING BRAKE IN A VEHICLE
PROCÉDÉ DE RÉGLAGE D'UN FREIN DE STATIONNEMENT DANS UN VÉHICULE

(30) Priorität: 25.03.2011 DE 102011006120
(43) Veröffentlichungstag der Anmeldung: 29.01.2014
(73) Patentinhaber: Robert Bosch GmbH, 70442 Stuttgart (DE)
(72) Erfinder: BAEHRLE-MILLER, Frank, 71101 Schoenaich (DE); PUTZER, Tobias, 74177 Bad Friedrichshall (DE)
(86) Internationale Anmeldenummer: PCT/EP2012/051182
(87) Internationale Veröffentlichungsnummer: WO 2012/130494

(56) Entgegenhaltungen:
- DE-A1- 10 356 096
- DE-A1- 19 858 763
- DE-A1-102007 046 953
- FR-A1- 2 847 629
- FR-A1- 2 906 209
- FR-A1- 2 941 757
- US-A1- 2004 238 299
- US-A1- 2005 109 568
- US-A1- 2005 167 212

## Beschreibung

Die Erfindung bezieht sich auf ein Verfahren zum Einstellen einer Feststellbremse in einem Fahrzeug.

### Stand der Technik

Bekannt sind Feststell- bzw. Parkbremsen in Fahrzeugen zum Erzeugen einer Klemmkraft, über die das Fahrzeug im Stillstand festgesetzt wird. Aus der DE 103 61 042 B3 ist eine elektromechanisch ausgebildete Feststellbremse bekannt, die einen elektrischen Bremsmotor aufweist, welcher einen Bremskolben mit einem Bremsbelag axial gegen eine Bremsscheibe beaufschlagt. Beim Zuspannen wird der elektrische Bremsmotor so lange betätigt, bis eine gewünschte Klemmkraft erreicht wird. Zum Lösen der Feststellbremse wird der Bremsmotor in Gegenrichtung angesteuert und so lange betätigt, bis der Bremsbelag nicht länger an der Bremsscheibe anliegt und die Klemmkraft vollständig abgebaut ist.

Die DE 10 2007 046 953 A1 offenbart eine elektromechanische Parkbremse mit einer über einen elektrischen Bremsmotor antreibbaren Bremsspindel, wobei die Antriebsanordnung von einer Blockiereinrichtung blockiert wird, sobald eine bestimmte Klemmkraft an der Bremsscheibe erreicht ist. Die Blockiereinrichtung wird nach dem Erreichen der Klemmkraft aktiviert und verhindert ein Nachlassen der Klemmkraft. Auf diese Weise soll dauerhaft das einzustellende Klemmkraftniveau gehalten werden können.

Die US 2005/0109568 A1 betrifft ebenfalls eine Parkbremse mit einem elektrischen Bremsmotor, der mithilfe einer Blockiervorrichtung arretiert werden kann. Die Blockiereinrichtung ist als bistabiles Element ausgeführt, das seine zwei stabilen Positionen auch ohne Erzeugen einer externen Kraft beibehält. Daher soll
diese Vorrichtung in besonderer Weise für Parkbremsen geeignet sein, da die Blockierfunktion auch bei einem Ausfall der elektrischen Versorgung beibehalten wird.

Auch die US 2005/0167212 A1 offenbart ein Blockieren einer Parkbremse nach dem Erreichen der Soll-Klemmkraft, um das erreichte Klemmkraftniveau durch Betätigung eines Blockiermechanismus einzufrieren.

### Offenbarung der Erfindung

Der Erfindung liegt die Aufgabe zugrunde, mit einfachen Maßnahmen den Zuspann- und Lösevorgang in einer elektromechanischen Feststellbremse effizient zu gestalten.

Diese Aufgabe wird erfindungsgemäß mit den Merkmalen des Anspruches 1 gelöst. Die Unteransprüche geben zweckmäßige Weiterbildungen an.

Das erfindungsgemäße Verfahren kann in einer elektromechanischen Feststellbremse in einem Fahrzeug angewandt werden, die einen elektrischen Bremsmotor aufweist, über den eine Klemmkraft erzeugbar ist. Hierbei wird die Rotationsbewegung des Rotors des elektrischen Bremsmotors in eine axiale Stellbewegung eines Stellglieds übertragen, über die ein Bremskolben, welcher Träger eines Bremsbelages ist, axial gegen eine Bremsscheibe gedrückt wird.

Gegebenenfalls ist die Feststellbremse mit einer Zusatzbremsvorrichtung versehen, um bedarfsweise und zusätzlich zur elektromechanischen Klemmkraft auch eine Zusatzklemmkraft bereitstellen zu können. Bei der Zusatzbremsvorrichtung handelt es sich insbesondere um eine hydraulische Bremsvorrichtung, vorzugsweise um die hydraulische Fahrzeugbremse des Fahrzeuges, wobei der Hydraulikdruck der Bremsvorrichtung auf den Bremskolben wirkt.

Zum Erzeugen einer Klemmkraft wird während des Zuspannvorgangs der Bremsmotor so lange betätigt, bis eine erste Endposition erreicht ist, die einer Klemmkraftposition entspricht, in welcher das gewünschte Klemmkraftniveau erreicht ist. Zum Lösen der Feststellbremse wird der elektrische Bremsmotor in Gegenrichtung bis zum Erreichen einer zweiten Endposition betätigt, die der Löseposition entspricht, bei der die Klemmkraft unter ein definiertes Niveau absinkt, insbesondere gleich Null ist.

Beim erfindungsgemäßen Verfahren wird der elektrische Bremsmotor beim Erreichen einer Endposition abgebremst. Dies kann sowohl beim Erreichen der Klemmkraftposition als auch beim Erreichen der Löseposition stattfinden. Im Unterschied zu Ausführungen aus dem Stand der Technik wird der elektrische Bremsmotor mit dem Erreichen der betreffenden Endposition aktiv abgebremst, so dass ein trägheitsbedingtes Überschwingen über die gewünschte Endposition hinaus vermieden wird. Dies führt zu einer Verkürzung des Brems- bzw. Lösevorgangs sowie des zurückgelegten Stellwegs und außerdem beim Zuspannvorgang zu einer Reduzierung der Bauteilbelastungen, da die Klemmkraftposition mit höherer Genauigkeit bzw. exakt erreicht wird und somit ein Zuspannen über das gewünschte Klemmkraftniveau hinaus vermieden wird. Neben einer reduzierten mechanischen Belastung der Bauteile wird auch die Ansteuerungselektronik des Bremsmotors entlastet, insbesondere für den Fall, dass der Bremsmotor während eines Bremsvorgangs sofort wieder in Löserichtung angesteuert wird. Dies kann beispielsweise auftreten, wenn ein bereits begonnener Verriegelungs- bzw. Bremsvorgang durch einen erkannten Anfahrwunsch des Fahrers abgebrochen werden muss.

Insgesamt wird die Kraftüberhöhung beim Zuspannvorgang aufgrund der Motorbremsfunktion reduziert, was zu einer Reduzierung der Komponentenbelastung führt. Außerdem wird die Zuspannzeit durch das Abbremsen verringert, Gleiches gilt für den Löse- bzw. Öffnungsvorgang. Außerdem wird der subjektiv empfundene Komfort verbessert, da die Funktionsbereitstellung nach dem Betätigen der Feststellbremse unmittelbar auf den Funktionsaufruf erfolgt. Des Weiteren ist die Belastung des Regel- bzw. Steuergeräts des Bremsmotors reduziert. Weiterhin ist vorteilhaft, dass das Verfahren ohne zusätzliche Hardware-Komponenten durchgeführt werden kann.

Der Bremsvorgang wird vorteilhafterweise durch ein elektrisches Bremsen des Bremsmotors durchgeführt. Zweckmäßigerweise erfolgt der Bremsvorgang ausschließlich auf elektrischem Wege. Zusätzlich oder alternativ sind grundsätzlich aber auch mechanische Bremsvorgänge möglich, beispielsweise indem mit dem Erreichen einer Endposition ein von dem Bremsmotor bewegtes Bauteil durch Reibung zusätzlich abgebremst wird.

Im Falle eines elektrischen Bremsens wird der Bremsvorgang insbesondere dadurch erreicht, dass der Bremsmotor kurzgeschlossen wird. Bei diesem dynamischen Bremsen des Motors fließt bei kurzgeschlossenen Motorklemmen ein Strom über den Innenwiderstand des Motors, solange sich der Rotor in Bewegung befindet. Das Bremsmoment, das hierbei erzeugt wird, verhält sich zur Motordrehzahl und zur zeitlichen Änderung des im kurzgeschlossenen Zustand des fließenden Stroms proportional, so dass das Motorbremsmoment bei höherer Motordrehzahl größer ist als bei niedrigerer Motordrehzahl. Das Motorbremsmoment kann bis zum Motorstillstand zur Verzögerung des Rotors bzw. Motorankers genutzt werden.

Der Beginn des Abbremsvorganges fällt zweckmäßigerweise mit dem Erreichen der Endposition zusammen, so dass erst mit dem Abbremsen begonnen wird, nachdem die Endposition erreicht worden ist. Grundsätzlich kann aber bereits mit dem Annähern an die Endposition der Abbremsvorgang gestartet werden, so dass mit dem Erreichen der Endposition der Motor stillsteht.

Die Dauer des Abbremsvorgangs kann entweder variabel oder fest eingestellt werden. Bei variabler Bestimmung der Abbremsdauer bemisst sich diese insbesondere aus einer motorischen Zustandsgröße, beispielsweise dem Motorstrom oder Motordrehzahl, wobei der Abbremsvorgang so lange andauert, bis der Motorstrom bzw. die Motordrehzahl einen zugeordneten Grenzwert unterschreitet. Der Grenzwert für den Motorstrom kann gegebenenfalls auf den Wert Null gesetzt werden oder, gemäß vorteilhafter Ausführung, auf einen höheren Wert, um robuster gegenüber Störungen bzw. Messwertrauschen des gemessenen Stromsignals zu sein. Beispielsweise kann der Grenzwert für den Strom bei 20 % des Leerlaufstroms liegen. Auch der Grenzwert für die Motordrehzahl kann entweder auf Null oder einen Wert ungleich Null gesetzt werden.

Bei einem Bremsvorgang, der für einen definierten Bremszeitraum durchgeführt wird, wird der Wert des Bremszeitraums groß genug gewählt, dass der Bremsmotor aus der höchstmöglichen Drehzahl bis zum Stillstand abgebremst werden kann. Der Bremszeitraum beträgt beispielsweise 200 ms.

Das erfindungsgemäße Verfahren läuft in einem Regel- bzw. Steuergerät im Fahrzeug ab, das Bestandteil des Feststellbremssystems sein kann.

Weitere Vorteile und zweckmäßige Ausführungen sind den weiteren Ansprüchen, der Figurenbeschreibung und den Zeichnungen zu entnehmen. Es zeigen:
- Fig. 1: einen Schnitt durch eine elektromechanische Feststellbremse für ein Fahrzeug, bei der die Klemmkraft über einen elektrischen Bremsmotor erzeugt wird,
- Fig. 2: ein Ablaufdiagramm mit Verfahrensschritten zum elektrischen Abbremsen des Bremsmotors, wobei die Bremszeitdauer aus dem Motorstrom bestimmt wird,
- Fig. 3: ein Ablaufdiagramm mit Verfahrensschritten zum elektrischen Abbremsen des Bremsmotors, wobei die Bremszeitdauer als konstante Zeitspanne vorgegeben ist.

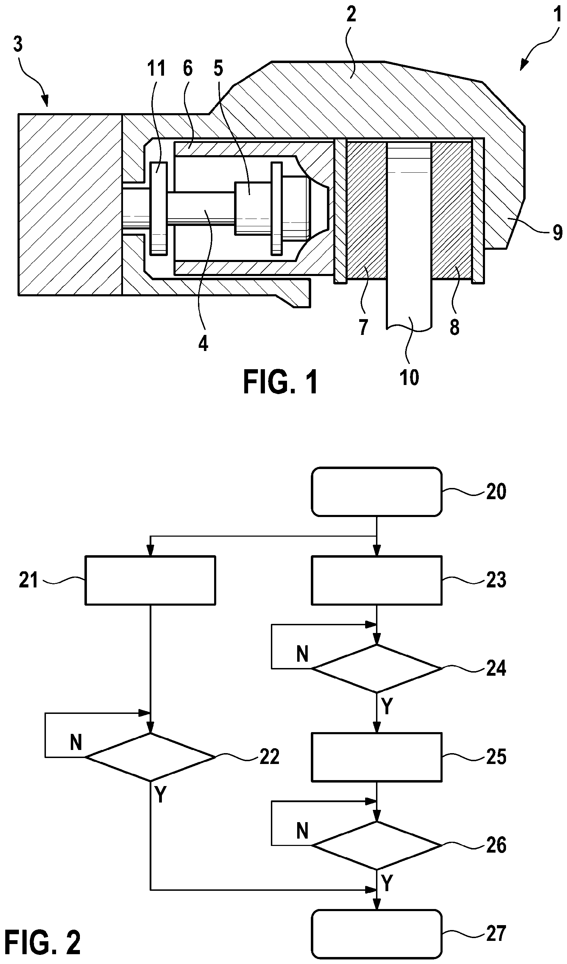

In Fig. 1 ist eine elektromechanische Feststellbremse 1 zum Festsetzen eines Fahrzeugs im Stillstand dargestellt. Die Feststellbremse 1 umfasst einen Bremssattel 2 mit einer Zange 9, welche eine Bremsscheibe 10 übergreift. Als Stellglied weist die Feststellbremse 1 einen Elektromotor als Bremsmotor 3 auf, der eine Spindel 4 rotierend antreibt, auf der ein als Spindelmutter ausgeführtes Spindelbauteil 5 drehbar gelagert ist. Bei einer Rotation der Spindel 4 wird das Spindelbauteil 5 axial verstellt. Das Spindelbauteil 5 bewegt sich innerhalb eines Bremskolbens 6, der Träger eines Bremsbelags 7 ist, welcher von dem Bremskolben 6 gegen die Bremsscheibe 10 gedrückt wird. Auf der gegenüberliegenden Seite der Bremsscheibe 10 befindet sich ein weiterer Bremsbelag 8, der ortsfest an der Zange 9 gehalten ist.

Innerhalb des Bremskolbens 6 kann sich das Spindelbauteil 5 bei einer Drehbewegung der Spindel 4 axial nach vorne in Richtung auf die Bremsscheibe 10 zu bzw. bei einer entgegen gesetzten Drehbewegung der Spindel 4 axial nach hinten bis zum Erreichen eines Anschlags 11 bewegen. Zum Erzeugen einer Klemmkraft beaufschlagt das Spindelbauteil 5 die innere Stirnseite des Bremskolbens 6, wodurch der axial verschieblich in der Feststellbremse 1 gelagerte Bremskolben 6 mit dem Bremsbelag 7 gegen die zugewandte Stirnfläche der Bremsscheibe 10 gedrückt wird.

Die Feststellbremse kann erforderlichenfalls von einer hydraulischen Fahrzeugbremse unterstützt werden, so dass sich die Klemmkraft aus einem elektromotorischen Anteil und einem hydraulischen Anteil zusammensetzt. Bei der hydraulischen Unterstützung wird die dem Bremsmotor zugewandte Rückseite des Bremskolbens 6 mit unter Druck stehendem Hydraulikfluid beaufschlagt.

Fig. 2 zeigt ein Ablaufdiagramm mit Verfahrensschritten zum elektrischen Abbremsen des Bremsmotors beim Erreichen einer Endposition, also beim Erreichen der Klemmkraftposition während des Zuspannvorganges oder der Löseposition während des Öffnungsvorganges. Der Verfahrensschritt 20 markiert den Start der dynamischen, elektromotorisch durchgeführten Motorbremse. Das Verfahren teilt sich auf in einen ersten Verfahrenszweig mit Verfahrensschritten 21 und 22 und einem zweiten, hierzu parallel durchzuführenden Verfahrenszweig mit Verfahrensschritten 23 bis 26. Im ersten Verfahrenszweig wird die Gesamtzeitdauer des Bremsvorganges überwacht. Hierzu wird im Verfahrensschritt 21 ein erster Timer bzw. Zeitwertzähler gestartet, der im folgenden Verfahrensschritt 22 auf Überschreiten eines oberen Grenzwertes abgeprüft wird. Solange der obere Zeitgrenzwert noch nicht erreicht worden ist, wird der Nein-Verzweigung ("N") folgend die Abfrage gemäß Verfahrensschritt 2 in regelmäßigen Abständen erneut durchlaufen. Mit dem Erreichen des oberen Zeitgrenzwertes Verfahrensschritt 22 wird der Ja-Verzweigung ("Y") folgend zum Verfahrensschritt 27 vorgerückt, der das Ende des Abbremsvorganges markiert.

Parallel zur Überprüfung der maximalen Zeitdauer des Abbremsvorganges im ersten Verfahrenszweig werden im zweiten Verfahrenszweig die Verfahrensschritte 23 bis 26 durchlaufen. Gemäß Verfahrensschritt 23 wird der Abbremsvorgang durch Kurzschließen des elektrischen Bremsmotors eingeleitet. Im nächsten Verfahrensschritt 24 erfolgt die Abfrage, ob der Motorstrom einen unteren Grenzwert unterschreitet. Ist dies noch nicht der Fall, wird der Nein-Verzweigung folgend der Verfahrensschritt 24 in zyklischen Abständen erneut durchlaufen und die Abfrage erneut durchgeführt. Unterschreitet der Motorstrom den unteren Stromgrenzwert, wird der Ja-Verzweigung folgend zum nächsten Verfahrensschritt 25 vorgerückt.

Es kann zweckmäßig sein, in der Abfrage gemäß Verfahrensschritt 24 erst dann zum nächsten Verfahrensschritt 25 vorzurücken, wenn der Motorstrom mindestens zweimal aufeinander folgend den unteren Stromgrenzwert unterschreitet.

Im Verfahrensschritt 25 wird ein weiterer Timer gestartet, der im nächsten Verfahrensschritt 26 auf Überschreiten eines zugeordneten Grenzwertes überprüft wird. Damit soll sichergestellt werden, dass der Motorstillstand zuverlässig nach dem Unterschreiten der Stromschwelle erreicht wird. Der Zeitgrenzwert, auf den der zweite Timer im Verfahrensschritt 26 überprüft wird, ist kleiner als der Zeitgrenzwert, der im parallelen Verfahrenszweig beim ersten Timer gilt. Typische Kennwerte sind 5 ms bis 60 ms für den Zeitgrenzwert gemäß zweitem Verfahrenszweig und 200 ms für den Zeitgrenzwert im ersten Verfahrenszweig.

Die Zeitabfrage gemäß Verfahrensschritt 26 wird bis zum Überschreiten des zweiten Zeitgrenzwertes durchgeführt. Nach dem Erreichen des Zeitgrenzwertes wird zum Verfahrensschritt 27 fortgefahren, der Abbremsvorgang des Bremsmotors ist damit beendet.

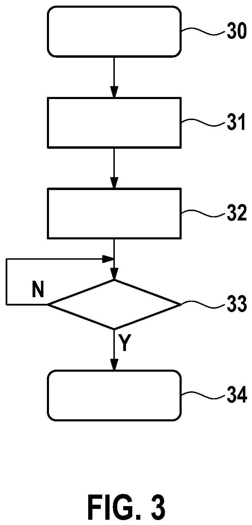

In Fig. 3 ist ein weiteres Ablaufdiagramm dargestellt mit Verfahrensschritten zum elektrischen Abbremsen des Bremsmotors, wobei die Bremszeitdauer als konstante Zeitspanne vorgegeben ist. Der Verfahrensschritt 30 markiert den Beginn des dynamischen Abbremsvorgangs, im Verfahrensschritt 31 wird der Bremsmotor kurzgeschlossen. Im darauffolgenden Verfahrensschritt 32 wird ein Timer gestartet, der im Verfahrensschritt 33 auf Überschreiten eines zugeordneten Zeitgrenzwertes überprüft wird. Der Zeitgrenzwert beträgt beispielsweise 200 ms und wird als feste Größe vorgegeben. Der Verfahrensschritt 33 wird der Nein-Verzweigung folgend so lange durchlaufen, bis der Zeitgrenzwert erreicht worden ist. Anschließend wird der Ja-Verzweigung folgend zum Verfahrensschritt 34 vorgerückt, der das Ende der Bremsansteuerung markiert.

## Patentansprüche

1. Verfahren zum Einstellen einer Feststellbremse (1) in einem Fahrzeug, die eine elektromechanische Bremsvorrichtung mit einem elektrischen Bremsmotor (3) umfasst, wobei der Bremsmotor (3) zum Erzeugen einer elektromechanischen Klemmkraft bis zu einer ersten Endposition und zum Lösen der Klemmkraft bis zu einer zweiten Endposition verstellt wird, **dadurch gekennzeichnet, dass** der Bremsmotor (3) beim Erreichen einer Endposition durch Kurzschließen elektrisch abgebremst wird.

2. Verfahren nach Anspruch 1, **dadurch gekennzeichnet, dass** der Bremsmotor (3) abgebremst wird, nachdem die Endposition erreicht worden ist.

3. Verfahren nach Anspruch 1 oder 2, **dadurch gekennzeichnet, dass** die Dauer des Abbremsvorgangs aus einer motorischen Zustandsgröße bestimmt wird.

4. Verfahren nach Anspruch 3, **dadurch gekennzeichnet, dass** der Bremsmotor (3) so lange abgebremst wird, bis der Motorstrom einen Grenzwert unterschreitet.

5. Verfahren nach einem der Ansprüche 1 bis 4, **dadurch gekennzeichnet, dass** der Bremsmotor (3) so lange abgebremst wird, bis die Motordrehzahl einen Grenzwert unterschreitet.

6. Verfahren nach einem der Ansprüche 1 bis 5, **dadurch gekennzeichnet, dass** der Bremsmotor (3) für einen definierten Bremszeitraum abgebremst wird.

7. Regel- bzw. Steuergerät das das Verfahrens nach einem der Ansprüche 1 bis 6 durchführt.

8. Feststellbremse in einem Fahrzeug mit einem Regel- bzw. Steuergerät nach Anspruch 7.

## Claims

1. Method for adjusting a parking brake (1) in a vehicle which has an electromechanical brake device with an electric brake motor (3), wherein the brake motor (3) is adjusted as far as a first end position in order to generate an electromechanical clamping force and is adjusted as far as a second end position in order to release the clamping force, **characterized in that** the brake motor (3) is electrically braked by short-circuiting when an end position is reached.

2. Method according to Claim 1, **characterized in that** the brake motor (3) is braked after the end position has been reached.

3. Method according to Claim 1 or 2, **characterized in that** the duration of the braking process is determined from a motor-related state variable.

4. Method according to Claim 3, **characterized in that** the brake motor (3) is braked until the motor current falls below a threshold value.

5. Method according to one of Claims 1 to 4, **characterized in that** the brake motor (3) is braked until the motor rotational speed falls below a threshold value.

6. Method according to one of Claims 1 to 5, **characterized in that** the brake motor (3) is braked for a defined braking time period.

7. Closed-loop and/or open-loop control unit which performs the method according to one of Claims 1 to 6.

8. Parking brake in a vehicle having a closed-loop and/or open-loop control unit according to Claim 7.

## Revendications

1. Procédé de réglage d'un frein de stationnement (1) dans un véhicule, lequel comprend un dispositif de freinage électromécanique pourvu d'un motofrein électrique (3), le motofrein (3) étant positionné jusqu'à une première position finale en vue de produire une force de freinage électromécanique et jusqu'à une deuxième position finale en vue de relâcher la force de freinage, **caractérisé en ce que** le motofrein (3) est freiné électriquement par court-circuit lorsqu'une position finale est atteinte.

2. Procédé selon la revendication 1, **caractérisé en ce que** le motofrein (3) est freiné après que la position finale ait été atteinte.

3. Procédé selon la revendication 1 ou 2, **caractérisé en ce que** la durée de l'opération de freinage est déterminée à partir d'une grandeur d'état du moteur.

4. Procédé selon la revendication 3, **caractérisé en ce que** le motofrein (3) est freiné jusqu'à ce que le courant du moteur devienne inférieur à une valeur limite.

5. Procédé selon l'une des revendications 1 à 4, **caractérisé en ce que** le motofrein (3) est freiné jusqu'à ce que la vitesse de rotation du moteur devienne inférieure à une valeur limite.

6. Procédé selon l'une des revendications 1 à 5, **caractérisé en ce que** le motofrein (3) est freiné pendant une période de freinage définie.

7. Régulateur ou contrôleur qui met en oeuvre le procédé selon l'une des revendications 1 à 6.

8. Frein de stationnement dans un véhicule, comprenant un régulateur ou contrôleur selon la revendication 7.
